# EUROPÄISCHE PATENTSCHRIFT

(11) **EP 1 080 949 B1**
(45) Veröffentlichungstag und Bekanntmachung des Hinweises auf die Patenterteilung: **22.12.2004**
(21) Anmeldenummer: 00110557.6
(22) Anmeldetag: 18.05.2000
(51) Int. Cl.: B60C 11/12, B60C 11/11

(54) **Fahrzeugluftreifen**
Vehicle tyre
Bandage pneumatique pour véhicule

(30) Priorität: 03.09.1999 DE 19942051
(43) Veröffentlichungstag der Anmeldung: 07.03.2001
(73) Patentinhaber: Continental Aktiengesellschaft, 30165 Hannover (DE)
(72) Erfinder: Hindriks, Günter, 30453 Hannover (DE); Sych, Thomas, 30900 Wedemark (DE); Mundl, Rheinhard, Dr., 30539 Hannover (DE); Gleissle, Susanne, 30989 Gehrden (DE)

(56) Entgegenhaltungen:
- EP-A- 0 618 092
- US-A- 2 104 532
- US-A- 5 322 107
- PATENT ABSTRACTS OF JAPAN vol. 018, no. 503 (M-1677), 21. September 1994 (1994-09-21) -& JP 06 171321 A (SUMITOMO RUBBER IND LTD), 21. Juni 1994 (1994-06-21)
- PATENT ABSTRACTS OF JAPAN vol. 017, no. 598 (M-1504), 2. November 1993 (1993-11-02) -& JP 05 178028 A (TOYO TIRE & RUBBER CO LTD), 20. Juli 1993 (1993-07-20)

## Beschreibung

Die Erfindung betrifft einen Fahrzeugluftreifen mit einem Laufstreifenprofil, welches durch Umfangsnuten und/oder Quernuten gebildete Profilpositive, wie Profilbänder oder Profilblöcke, aufweist, wobei Profilpositive vorgesehen sind, die durch ein Einschnittmuster in zumindest ein zentrales Profilelement und dieses umgebende Profilelemente gegliedert sind.

Es ist bekannt und üblich, Fahrzeugluftreifen, die insbesondere für einen Einsatz unter winterlichen Fahrbedingungen, somit auf schneeigen, matschigen oder nassen Fahrbahnen, besonders geeignet sein sollen, mit Profilpositiven zu versehen, die mit einer Vielzahl von schmalen, im Allgemeinen eine Breite von 0,3 bis 0,6 mm aufweisenden Einschnitten versehen sind. Diese Einschnitte sollen einen guten Griff auf Schnee und Eis gewährleisten und ein sicheres Traktions- und Bremsverhalten auf schnee- und eisbedecktem Untergrund sicherstellen. Solche Einschnitte sind in verschiedenen Ausführungen bekannt, wobei vor allem gerade ausgeführte und wellen- oder zickzackförmig verlaufende Einschnitte und dergleichen üblich sind. Auch bei Sommerreifen werden oft zur Verbesserung des Nassgriffes Einschnitte im Laufstreifenprofil vorgesehen, deren Anzahl jedoch gering gehalten wird, um die Beweglichkeit der Profilpositive nicht zu stark zu erhöhen.

Ein Fahrzeugluftreifen der eingangs genannten Art ist beispielsweise aus der JP-A 06171321 bekannt. Der Laufstreifen des Reifens weist Profilblöcke auf, die jeweils ein zentrales, von einem schmalen Einschnitt umlaufendes Profilelement aufweisen. Von diesem umlaufenden Einschnitt aus können zwei bis vier weitere Einschnitte bis zu den Blockkanten reichen und derart das zentrale Element umgebende Profilelemente bilden.

Aus der EP-A 0 691 222 ist ein Reifen bekannt, dessen Laufstreifenprofil mit einer Einschnittstruktur versehen ist, die ein Netz aus n-Ecken bildet, wobei diese n-Ecken insbesondere als regelmäßige Sechsecke ausgebildet sind. Dadurch sind die in den Profilblöcken vorgesehenen Einschnitte in der Art einer Bienenwabenstruktur angeordnet. Laufstreifenprofile mit solchen Profilpositiven besitzen eine hohe und somit vorteilhafte Einschnittdichte und sind bezüglich ihrer Steifigkeit sehr gleichmäßig auslegbar.

Aus der AT-B 402 181 ist ein Laufstreifenprofil für einen Winterreifen bekannt, dessen Fahrverhalten auf trockenen Fahrbahnen dadurch verbessert wird, dass in den Profilblöcken Gruppen von Einschnitten angeordnet werden, von welchen zumindest einer beidseitig innerhalb des Profilblockes endet, wobei die Enden von in Umfangsrichtung benachbarten Einschnitten zumindest jeweils abwechselnd durch weitere Einschnitte verbunden sind. Bei einer derartigen Einschnittausgestaltung dominieren die in Reifenquerrichtung verlaufenden Einschnitte. Damit ist die Anzahl der auch in seitlicher Richtung wirkenden Griffkanten etwas eingeschränkt.

Die Erfindung hat sich nun die Aufgabe gestellt, bei einem Fahrzeugreifen der eingangs genannten Art durch eine innovative Einschnittstruktur in den Profilpositiven die Wintergriffeigenschaften weiter zu verbessern, bei einer hohen Einschnittdichte gleichzeitig eine hohe Klotzsteifigkeit zu gewährleisten, sodass auch auf trockenen Fahrbahnen gute Fahreigenschaften erzielbar sind, und unter allen Fahrbedingungen ein gutes Handling des Reifens sowohl bei Geradeausfahrt als auch beim Kurvenfahren sicherzustellen.

Gelöst wird die gestellte Aufgabe erfindungsgemäß dadurch, dass um das zumindest eine zentrale Profilelement zumindest zwei Lagen von in der Art von Blütenblättern einer Knospe angeordneten Profilelementen vorgesehen sind, wobei die innerhalb einer Lage angeordneten Profilelemente durch Verbindungsbrücken oder durch Verbindungseinschnitte voneinander getrennt sind, und wobei die Verbindungseinschnitte bzw. die Verbindungsbrücken einer Lage gegenüber jenen in benachbarten Lagen versetzt sind.

Die erfindungsgemäße Anordnung von Profilelementen in Anlehnung an den Aufbau einer Blütenknospe hat sich als sehr vorteilhaft herausgestellt. Reifen, deren Profilblöcke oder Profilbänder mit derartigen Strukturen versehen sind, besitzen nicht nur einen ausgezeichneten Griff auf Eis und Schnee sondern auch sehr gute Fahreigenschaften auf trockenen Fahrbahnen. Die zugehörige Anordnung der die Profilelemente bildenden Einschnitte kann leicht derart erfolgen, dass keine oder keine ausgeprägte Vorzugsorientierung der durch die Einschnitte gebildeten Griffkanten vorliegt. Dies hat einerseits Auswirkungen auf die Steifigkeit der Profilpositive, die dadurch sehr hoch sein kann, und auch auf die Wirkungsrichtung der zur Verfügung gestellten Griffkanten, die bei einer erfindungsgemäßen Ausführung gleichermaßen in Umfangsrichtung und in seitlicher Richtung wirken können. Reifen mit erfindungsgemäßen Einschnittsstrukturen im Laufstreifenprofil besitzen daher auch ein sehr gutes Seitenführungsverhalten.

Die Einschnittdichte und die Steifigkeit der Profilpositive lassen sich dann besonders gut aufeinander abstimmen, wenn um das zumindest eine zentrale Profilelement bis zu fünf Lagen von in der Art von Blütenblättem angeordneten Profilelementen vorgesehen sind.

Für eine in allen Richtungen möglichst gleichmäßige Steifigkeit ist es von Vorteil, wenn die äußerste Lage der in der Art von Blütenblättern angeordneten Profilelemente zumindest zum Teil zwischen einem in geschlossener Form umlaufenden Einschnitt und den Seitenkanten des jeweiligen Profilpositivs und die weitere(n) Lage(n) zwischen in geschlossener Form umlaufenden Einschnitten gebildet sind.

in jeder Lage werden dabei zwei oder mehr Profilelemente vorgesehen, deren Anzahl in sämtlichen der jeweils vorgesehenen Lagen gleich ist. Damit ist vor allem eine für die Steifigkeit der Profilpositive günstige gleichmäßige Anordnung der Profilelemente möglich.

Um eine möglichst gleichmäßige Steifigkeit der Profilpositive zu erzielen und um Vorzugsorientierungen der Einschnitte weitgehend zu vermeiden, ist es von Vorteil, wenn die innerhalb einer Lage angeordneten Profilelemente zumindest im Wesentlichen übereinstimmende Gestalt und Größe aufweisen.

In diesem Zusammenhang ist es auch von Vorteil, wenn die die Profilelemente umlaufenden Einschnitte einen Verlauf aufweisen, der mit der äußeren Form des betreffenden Profilpositivs übereinstimmt.

Bei parallelogrammförmig gestalteten Profilblöcken werden die Einschnitte im Profilblock insbesondere derart angeordnet, dass innerhalb einer Lage je ein Paar von zumindest im Wesentlichen L-förmig oder U-förmig gestalteten Profilelementen gebildet wird. Bei derartig strukturierten Profilblöcken lassen sich die Profilblocksteifigkeit und eine hohe Einschnittdichte besonders gut aufeinander abstimmen.

Weitere Merkmale, Vorteile und Einzelheiten der Erfindung werden nun anhand der Zeichnung, die schematische Darstellungen mehrerer Ausführungsformen der Erfindung enthält, näher beschrieben. Dabei zeigen
Fig. 1, 2, 4 und 5 Draufsichten auf Ausführungsformen von erfindungsgemäß ausgeführten Profilblöcken für ein Laufstreifenprofil eines Fahrzeugluftreifens und
Fig. 3 eine Draufsicht auf eine Teilabwicklung eines gemäß der gegenständlichen ausgeführten Laufstreifenprofils.

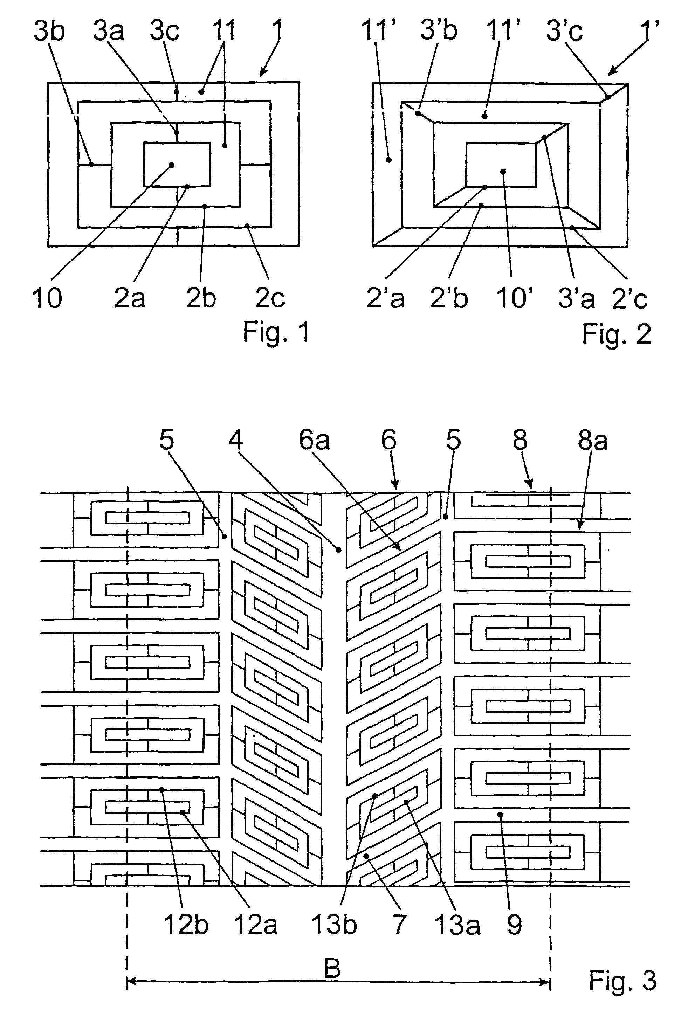

Anhand der Fig. 1, 2, 4 und 5 werden grundsätzliche Ausführungsvarianten der Erfindung näher beschrieben. Um das Grundprinzip der gegenständlichen Erfindung zu verdeutlichen, sind dabei die dargestellten Profilpositive Profilblöcke 1, 1', 1'', 1''', die in Draufsicht rechteckförmig gestaltet sind. Die gegenständliche Erfindung ist jedoch nicht auf Reifen mit Profilen eingeschränkt, deren Profilpositive Blöcke sind, vielmehr können erfindungsgemäße Ausgestaltungen auch in Profilpositiven vorgesehen sein, die in Umfangsrichtung des Profils umlaufende Bänder sind. Die Profilblöcke 1, 1', 1", 1''' können ferner in Draufsicht derart parallelogrammförmig oder parallelogrammähnlich sein, dass sie stumpfe und spitze Winkel aufweisen.

Die dargestellten Profilblöcke 1, 1', 1'', 1''' weisen zwei kürzere und zwei längere, jeweils parallel zueinander verlaufende Seiten auf. Die Profilblöcke 1, 1', 1'', 1''' sind durch besondere Einschnittmuster in Profilelemente 10, 11, 10', 10'', 11' gegliedert.

Bei der in Fig. 1 dargestellten Ausführungsform ist der Profilblock 1 durch ein Einschnittmuster in ein zentrales, rechteckförmiges Profilelement 10 und in mehrere, dieses in "Lagen" umlaufende U-förmige Profilelemente 11 gegliedert. Dazu besteht das Einschnittmuster aus drei unterschiedlich großen, einander jeweils in geschlossener Rechteckform umlaufenden Einschnitten 2a, 2b, 2c. Das kleinste Rechteck umschließt das Profilelement 10, welches von dem nächstgrößeren Rechteck umgeben ist. Das dritte, wieder größere Einschnittrechteck 2c umgibt das vom Einschnittrechteck 2b gebildete Rechteck. Der Verlauf bzw. die Anordnung der Einschnitte 2a, 2b, 2c ist an die Außenkontur des Profilblocks 1 angepasst, sodass die jeweils längeren Seiten der von den Einschnitten 2a, 2b, 2c gebildeten Rechtecke zumindest im Wesentlichen parallel zu den längeren Seitenkanten des Profilblocks 1 und die kürzeren Seiten parallel zu den kurzen Seitenkanten des Profilblocks 1 verlaufen. Durch Paare von Verbindungseinschnitten 3a, 3b, 3c, die jeweils an zwei Stellen die Einschnitte 2a, 2b, die Einschnitte 2b, 2c und die Einschnitte 2c mit zwei gegenüber liegenden Seitenkanten des Profilblocks 1 verbinden, erfolgt eine Gliederung in Paare von U-förmigen Profilelementen 11.

Die Verbindungseinschnitte 3a und 3b teilen die Profilbereiche zwischen den beiden Einschnitten 2a, 2b bzw. 2b, 2c jeweils in zwei gleich große, U-förmige Profilelemente 11. Dabei sind die Verbindungseinschnitte 3b zu den Verbindungseinschnitten 3a um 90° versetzt. Die Verbindungseinschnitte 3c verlaufend analog zu den Verbindungseinschnitten 3a, jedoch vom Einschnitt 2c bis zu den Profilblockkanten. Dadurch wird im Profilblock 1 das dritte Paar von U-förmigen Profilelementen 11 gebildet.

Der gegenseitige Versatz der Paare von Verbindungseinschnitten 3a, 3b und 3c hat eine gegenseitige Anordnung der Profilelemente 11 zur Folge, die der Anordnung der Blütenblätter in einer Blütenknospe ähnelt.

Es hat sich herausgestellt, dass eine derartige Gliederung eines Profilblocks in Profilelemente eine signifikante Erhöhung des Griffpotentials bei gleichzeitig hoher Profilblocksteifigkeit bewirkt. Laufstreifenprofile mit derart gestalteten Profilblöcken weisen daher ausgezeichnete Griffeigenschaften unter winterlichen Fahrbedingungen auf. Trotz der hohen Anzahl von Griffkanten bleibt der Profilblock sehr stabil. Die durch das Einschnittmuster zur Verfügung stehenden Griffkanten besitzen außerdem keine oder kaum eine Vorzugsrichtung, wie es etwa bei den aus dem Stand der Technik bekannten, gerade oder wellen- bzw. zickzackförmig verlaufenden Einschnitten der Fall ist.

Die Breite der die Gliederung bewirkenden Einschnitte 2a, 2b, 2c, 3a, 3b, 3c entspricht der für solche Einschnitte üblichen Breite von 0,3 bis 1 mm, insbesondere von 0,3 bis 0,6 mm. Die Tiefe der Einschnitte kann bis auf die vorgesehene Profiltiefe reichen, die üblicherweise 7 bis 8 mm beträgt. Es ist möglich und dem Fachmann überlassen, die Einschnitte 2a, 2b, 2c bzw. 3a, 3b, 3c mit unterschiedlicher oder über ihren Verlauf variierender Tiefe zu versehen, um auf bestimmte Eigenschaften des Profilblocks bzw. des Profils mit solchen Profilblöcken Einfluss zu nehmen. Ob und in welcher Weise derartige Maßnahmen gesetzt werden, wird unter anderem auch davon abhängen, an welcher Stelle im Profil Profilblöcke mit erfindungsgemäß ausgeführten Einschnittmustem mit Umfangsund Quernuten kombiniert werden und wie die sonstige Ausgestaltung des Laufstreifenprofils getroffen wird.

Was die Anordnung des Einschnittmusters zur Gliederung des Profilblocks 1 in Profilelemente 10, 11 betrifft, hat es sich als günstig herausgestellt, wenn die zwischen den einzelnen Einschnitten 2a, 2b, 2c gewählten Abstände nicht zu weit voneinander abweichen, insbesondere wenn diese zumindest im Wesentlichen gleich groß gewählt werden. Was die diesbezügliche Anordnung der Einschnitte 2a, 2b, 2c betrifft, ist es dem Fachmann überlassen, zur Beeinflussung bestimmter Eigenschaften entsprechende Anpassungen vorzunehmen.

Fig. 2 zeigt eine weitere Ausführungsvariante der Erfindung bei einem Profilblock 1', bei dem die Anordnung der einander in geschlossener Form umlaufenden Einschnitte 2'a, 2'b und 2'c jener des Profilblocks 1 aus Fig. 1 entspricht. Abweichend von der Ausführungsform gemäß Fig. 1 ist die Anordnung der Verbindungseinschnitte 3'a, 3'b und 3'c, die bei dieser Ausführungsform Ecken der Einschnitte 2'a, 2'b, 2'c miteinander verbinden. Die Verbindungseinschnitte 3'a verlaufen zwischen den einander diagonal gegenüberliegenden Ecken der Einschnitte 2'a und 2'b, die Verbindungseinschnitte 3'b jeweils diagonal versetzt zwischen den Ecken der Einschnitte 2'b und 2'c und die Verbindungseinschnitte 3'c wieder mit entsprechendem Versatz, zwischen zwei der diagonal gegenüberliegenden Ecken der Einschnitte 2'c und den zugehörigen Blockeckbereichen. Durch diese Anordnung entstehen im Profilblock 1' Paare von L-förmigen Profilelemente 11' und ein zentrales, rechteckförmiges Profilelement 10'. Auch bei dieser Ausführungsform ist die Ähnlichkeit der Anordnung der Profilelemente 11' mit jener der Blütenblätter einer Blütenknospe erkennbar.

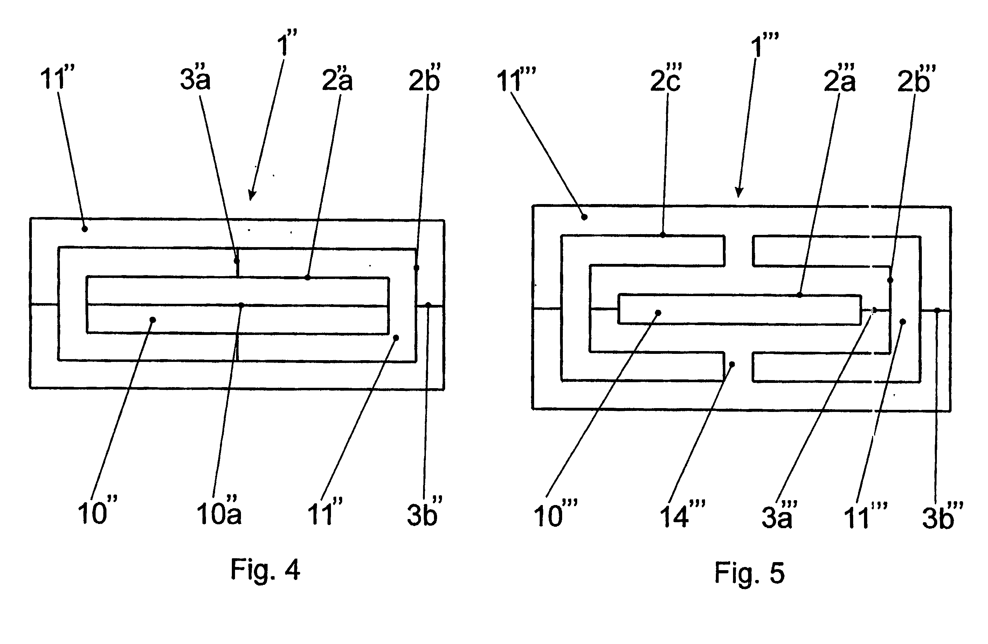

Bei der Ausführungsform gemäß Fig. 4 ist der Profilblock 1'' durch zwei einander in Rechteckform umlaufende Einschnitte 2''a, 2''b und durch Verbindungseinschnitte 3''a, 3''b, ähnlich zur Ausführungsform gemäß Fig. 1, in vier U-förmige Profilelemente 11'' gegliedert. An Stelle eines einzigen zentralen Profilelements sind durch einen zusätzlichen Einschnitt 10"a, der parallel zu den längeren Seiten des Profilblocks 1'' verläuft, zwei hier gleich große Profilelemente 10'' vorgesehen.

Fig. 5 zeigt eine Ausführungsvariante eines Profilblocks 1''' mit einem zentralen, durch einen Einschnitt 2'''a gebildeten rechteckförmigen Profilelement 10'''. Der Profilblock 1''' ist durch weitere Einschnitte 2'''b, 2'''c derart gegliedert, dass in drei Lagen drei Paare von bei der dargestellten Ausführung gleich großen U-förmigen Profitelementen 11''' gebildet werden. In der mittleren dieser Lagen sind die Profilelemente durch Verbindungsbrücken 14 voneinander getrennt, die breiter sind als die Verbindungseinschnitte 3'''a, 3'''c, die, ähnlich zu den Ausführungsformen gemäß Fig. 1 und Fig. 4, zwischen den Profilelementen 11''' in den beiden weiteren Lagen verlaufen. Die gegenseitige Anordnung der Einschnitte 3'''a und 3'''c und der Verbindungsbrücken 14 erfolgt wieder mit entsprechendem Versatz, sodass auch bei dieser Ausführungsform die Ähnlichkeit mit den Blütenblättem einer Knospe erkennbar ist. Die Verbindungsbrücken 14 können dabei insbesondere eine Breite von 1 bis 3 mm aufweisen.

Fig. 3 zeigt eine Draufsicht auf eine Teilabwicklung eines erfindungsgemäß gestalteten Laufstreifenprofils, welches eine entlang der Mittelumfangslinie gerade verlaufende Umfangsnut 4 und je zwei weitere im Abstand zu dieser verlaufende und ebenfalls gerade ausgeführte Umfangsnuten 5 aufweist. Zwischen den Umfangsnuten 4, 5 sind Blockreihen 6, schulterseitig sind Blockreihen 8 angeordnet, die jeweils aus Profilblöcken 6a, 8a bestehen.

Quernuten 7 trennen die Profilblöcke 6a in den Blockreihen 6 in Umfangsrichtung derart voneinander, dass ein laufrichtungsgebunden gestaltetes Profil entsteht. Die Quernuten 7 sind unter einem spitzen Winkel zur Umfangsrichtung des Profiles geneigt, wodurch die Profilblöcke 6a in den beiden Blockreihen 6 eine in Draufsicht parallelogrammförmige Gestalt mit jeweils zwei spitzen und zwei stumpfen Winkel an den Eckbereichen erhalten.

Die Quernuten 9 zwischen den in Umfangsrichtung benachbarten Profilblöcken 8a der Schulterblockreihen 8 verlaufen in axialer Richtung und in Fortsetzung der Quernuten 7 aus den mittleren Blockreihen 6. Die Profillblöcke 8a der Schulterblockreihen 8 sind in Draufsicht als Rechtecke gestaltet.

Die Einschnittmuster in den Profilblöcken 6a und 8a entsprechen der in Fig. 1 dargestellten Ausführung, mit dem Unterschied, dass jeweils lediglich zwei einander in geschlossener Form umlaufende Einschnitte 13a, 13b bzw. 12a, 12b vorgesehen sind. Sämtliche Einschnitte, auch die Verbindungseinschnitte, verlaufen analog zur Ausführungsform gemäß Fig. 1 parallel zu den Profilblockkanten.

Die in Fig. 3 eingezeichnete Breite B ist die Breite des Laufstreifenprofils in der Bodenaufstandsfläche, kennzeichnet also jener Bereich des Profils, mit dem der Reifen unter Nenndruck und Nennlast mit dem Untergrund in Kontakt tritt. Die Schulterblöcke 8a sind daher zum Teil bereits außerhalb des bodenberührenden Bereiches angeordnet.

Die Erfindung ist auf die dargestellten und beschriebenen Ausführungsformen nicht eingeschränkt. Bei sämtlichen dieser Ausführungsformen verlaufen die Einschnitte entlang ihrer diversen Abschnitte gerade. Dieser gerade Verlauf kann zumindest teilweise durch einen wellenförmigen oder zickzackförmigen Verlauf ersetzt werden. Es können ferner mehr als zwei Profilelemente zwischen den einander umlaufenden Einschnitten gebildet werden. Die Profilelemente zwischen einander umlaufenen Einschnitten können auch unterschiedliche Größen aufweisen. Erfindungsgemäß ausgeführte Einschnittmuster können auch in anders gestalteten Profilblöcken und in Laufstreifenbändem vorgesehen werden, beispielsweise in trapezförmigen Profilblöcken oder in Profilblöcken, die oval oder in sonstiger Art rund ausgeführt sind. Demnach können die in geschlossener Form einander umlaufenden Einschnitte entlang von Kreisen, Ovalen etc. verlaufen. Erwähnt sei ferner, dass eine erfindungsgemäße Gliederung in Profilelemente nicht über die gesamte Blockoder Laufstreifenbandoberfläche erfolgen muss und dass Kombinationen mit anders gestalteten Einschnittmustem möglich sind.

## Patentansprüche

1. Fahrzeugluftreifen mit einem Laufstreifenprofil, welches durch Umfangsnuten (4, 5) und/oder Quernuten (7, 9) gebildete Profilpositive, wie Profilbänder oder Profilblöcke, aufweist, wobei Profilpositive vorgesehen sind, die durch ein Einschnittmuster in zumindest ein zentrales Profilelement (10, 10', 10", 10''')und dieses umgebende Profilelemente (11,11', 11 ", 11''') gegliedert sind,
**dadurch gekennzeichnet,**
**dass** um das zumindest eine zentrale Profilelement (10, 10', 10", 10''') zumindest zwei Lagen von in der Art von Blütenblättem einer Knospe angeordneten Profilelementen ( 11, 11', 11", 11 "') vorgesehen sind,
wobei die innerhalb einer Lage angeordneten Profilelemente (11, 11', 11", 11"') durch Verbindungsbrücken (14) oder durch Verbindungseinschnitte (3a, 3b, 3c, 3'a, 3'b, 3'c, 3"a, 3"b, 3"'a, 3"'c) voneinander getrennt sind, und
wobei die Verbindungseinschnitte (3a, 3b, 3c, 3'a, 3'b, 3'c, 3"a, 3"b, 3"'a, 3"'c) bzw. die Verbindungsbrücken (14) einer Lage gegenüber jenen in benachbarten Lagen versetzt sind.

2. Fahrzeugluftreifen nach Anspruch 1, **dadurch gekennzeichnet, dass** um das zumindest eine zentrale Profilelement (10, 10', 10", 10"') bis zu fünf Lagen von in der Art von Blütenblättern einer Knospe angeordneten Profilelementen (11, 11', 11", 11''') vorgesehen sind.

3. Fahrzeugluftreifen nach Anspruch 1 oder 2, **dadurch gekennzeichnet, dass** eine der Lagen der in der Art von Blütenblättem angeordneten Profilelemente (11, 11', 11'') zumindest zum Teil zwischen einem in geschlossener Form umlaufenden Einschnitt (2c, 2'c, 2''b, 12b, 13b) und Seitenkanten des Profilpositivs (1,1', 1'', 6a, 8a) und die weitere(n) Lage(n) zwischen zwei einander in geschlossener Form umlaufenden Einschnitten (2a, 2b, 2c, 2'a, 2'b, 2'c, 2''a, 2''b, 12a, 12b, 13a, 13b) gebildet sind.

4. Fahrzeugluftreifen nach einem der Ansprüche 1 bis 3, **dadurch gekennzeichnet, dass** in jeder Lage zumindest zwei Profilelemente (11, 11', 11'', 11''') vorgesehen sind, wobei sämtliche Lagen eine übereinstimmende Anzahl von Profilelementen (11, 11', 11'', 11''') aufweisen.

5. Fahrzeugluftreifen nach einem der Ansprüche 1 bis 4, **dadurch gekennzeichnet, dass** die innerhalb einer Lage angeordneten Profilelemente (11,11', 11", 11"') zumindest im Wesentlichen übereinstimmende Gestalt und Größe aufweisen.

6. Fahrzeugluftreifen nach einem der Ansprüche 1 bis 5, **dadurch gekennzeichnet, dass** die die Profilelemente (11,11', 11 ", 11''') umlaufenden Einschnitte (2a, 2b, 2c, 2'a, 2'b, 2'c,, 2''a, 2''b, 2'''a, 2'''b, 2'''c, 12a, 12b) zumindest zum Teil in Übereinstimmung mit der äußeren Form des betreffenden Profilpositivs (1, 1', 1", 1''', 6a, 8a) verlaufen.

7. Fahrzeugluftreifen nach einem der Ansprüchel bis 6, **dadurch gekennzeichnet, dass** in parallelogrammförmig gestalteten Profilblöcken (1, 1', 1 ", 1''', 6a, 8a) innerhalb einer Lage je ein Paar von zumindest im Wesentlichen L-förmig oder U-förmig gestalteten Profilelementen (11, 11', 11'', 11''') vorgesehen ist.

## Claims

1. Pneumatic vehicle tyre having a tread strip profile which has positive profile portions such as profile strips or profile blocks, formed by circumferential grooves (4, 5) and/or transverse grooves (7, 9), positive profile portions being provided which are divided by an incision pattern into at least one central profile element (10, 10', 10", 10''') and profile elements (11, 11', 11", 11''') surrounding same,
**characterised in that**
around the at least one central profile element (10, 10', 10", 10''') are provided at least two layers of profile elements (11, 11', 11", 11''') which are arranged in the manner of petals of a bud,
the profile elements (11, 11', 11", 11''') arranged within a layer being separated from one another by connecting bridges (14) or by connecting incisions (3a, 3b, 3c, 3'a, 3'b, 3'c, 3"a, 3"b, 3'''a, 3'''c), and the connecting incisions (3a, 3b, 3c, 3'a, 3'b, 3'c, 3"a, 3"b, 3'''a, 3'''c) or respectively the connecting bridges (14) of one layer being offset relative to those in adjacent layers.

2. Pneumatic vehicle tyre according to claim 1, **characterised in that** around the at least one central profile element (10, 10', 10", 10''') are provided up to five layers of profile elements (11, 11', 11", 11''') arranged in the manner of petals of a bud.

3. Pneumatic vehicle tyre according to claim 1 or 2, **characterised in that** one of the layers of the profile elements (11, 11', 11") arranged in the manner of petals is formed at least partially between an incision (2c,2'c,2"b, 12b,13b) extending round in closed form and side edges of the positive profile portion (1, 1', 1", 6a, 8a), and the additional layer(s) is (are) formed between two incisions (2a, 2b, 2c, 2'a, 2'b, 2'c, 2"a, 2"b, 12a, 12b, 13a, 13b) extending around one another in closed form.

4. Pneumatic vehicle tyre according to one of claims 1 to 3, **characterised in that** at least two profile elements (11, 11', 11", 11''') are provided in each layer, all the layers having a matching number of profile elements (11, 11', 11", 11''').

5. Pneumatic vehicle tyre according to one of claims 1 to 4, **characterised in that** the profile elements (11, 11', 11", 11''') arranged within a layer are of an at least substantially matching shape and size.

6. Pneumatic vehicle tyre according to one of claims 1 to 5, **characterised in that** the incisions (2a, 2b, 2c, 2'a, 2'b, 2'c, 2"a, 2"b, 2'''a, 2'''b, 2'''c, 12a, 12b) going around the profile elements (11, 11', 11", 11''') extend at least partially to match the outer shape of the respective positive profile portion (1, 1', 1", 1''', 6a, 8a).

7. Pneumatic vehicle tyre according to one of claims 1 to 6, **characterised in that** in profile blocks (1, 1', 1", 1''', 6a, 8a) which have a parallelogram shape, a pair of at least substantially L-shaped or U-shaped profile elements (11, 11', 11", 11''') is provided, within a layer, for each profile block.

## Revendications

1. Pneumatique pour véhicule, doté d'un profil de bande de roulement qui présente des saillies profilées, par exemple des bandes profilées ou des blocs profilés, formées par des rainures périphériques (4, 5) et/ou des rainures transversales (7, 9), des saillies profilées qui sont divisées par un motif de découpes en au moins un élément profilé central (10, 10', 10", 10''') et en éléments profilés (11, 11', 11", 11''') qui entourent le premier étant prévues,
**caractérisé en ce que**
autour d'au moins un élément profilé (10, 10', 10", 10'''), au moins deux couches d'éléments profilés (11, 11', 11", 11''') disposées à la manière des feuilles d'un bourgeon sont prévues,
les éléments profilés (11, 11', 11", 11''') disposés à l'intérieur d'une couche étant séparés les uns des autres par des ponts de liaison (14) ou par des découpes de liaison (3a, 3b, 3c, 3'a, 3'b, 3'c, 3"a, 3"b, 3'''a 3'''c),
les découpes de liaison (3a, 3b, 3c, 3'a, 3'b, 3'c, 3"a, 3"b, 3'''a, 3'''c) et les ponts de liaison (14) d'une couche étant décalés par rapport à ceux situés dans les couches voisines.

2. Pneumatique pour véhicule selon la revendication 1, **caractérisé en ce qu'**autour du ou des éléments profilés centraux (10, 10', 10", 10'''), jusqu'à cinq couches d'éléments profilés (11, 11', 11", 11''') disposés à la manière des feuilles d'un bourgeon sont prévues.

3. Pneumatique pour véhicule selon les revendications 1 ou 2, **caractérisé en ce que** l'une des couches d'éléments profilés (11, 11', 11") disposés à la manière de feuilles de bourgeon est formée au moins en partie entre une découpe (2c, 2'c, 2"b, 12b, 13b) périphérique fermée et les arêtes latérales des saillies profilées (1, 1', 1", 6a, 8a), la ou les autres couches (2a, 2b, 2c, 2'a, 2'b, 2'c, 2"a, 2"b, 12a, 12b, 13a, 13b) qui s'entourent mutuellement étant formées entre deux découpes de forme fermée.

4. Pneumatique pour véhicule selon l'une des revendications 1 à 3, **caractérisé en ce que** dans chaque couche, au moins deux éléments profilés (11, 11', 11", 11''') sont prévus, toutes les couches présentant un nombre correspondant d'éléments profilés (11, 11', 11", 11''').

5. Pneumatique pour véhicule selon l'une des revendications 1 à 4, **caractérisé en ce que** les éléments profilés (11, 11', 11'', 11''') disposés à l'intérieur d'une couche ont des tailles et des formes qui se correspondent au moins essentiellement.

6. Pneumatique pour véhicule selon l'une des revendications 1 à 5, **caractérisé en ce que** les découpes (2a, 2b, 2c, 2'a, 2'b, 2'c, 2"a, 2"b, 2'''a, 2'''b, 2'''c, 12a, 12b) qui entourent les éléments profilés (11, 11', 11", 11''') s'étendent au moins en partie en correspondance avec la forme extérieure de la saillie profilée (1, 1', 1", 1''', 6a, 8a) concernée.

7. Pneumatique pour véhicule selon l'une des revendications 1 à 6, **caractérisé en ce que** dans les blocs profilés (1, 1', 1", 1"', 6a, 8a) en forme de parallélogramme, une paire d'éléments profilés (11, 11', 11", 11''') au moins essentiellement en forme de L ou en forme de U est prévue dans chaque couche.
